# EUROPÄISCHE PATENTSCHRIFT

(11) **EP 2 400 193 B1**
(45) Veröffentlichungstag und Bekanntmachung des Hinweises auf die Patenterteilung: **28.08.2019**
(21) Anmeldenummer: 10006531.7
(22) Anmeldetag: 23.06.2010
(51) Int. Cl.: F16K 31/06

(54) **Vorrichtung zur Durchflussregelung eines flüssigen oder gasförmigen Mediums**
Device for regulating the flow of a fluid or gaseous medium
Dispositif destiné à la régulation du débit d'un milieu liquide ou gazeux

(43) Veröffentlichungstag der Anmeldung: 28.12.2011
(73) Patentinhaber: Asco Numatics GmbH, 75248 Ölbronn-Dürrn (DE)
(72) Erfinder: Ams, Felix, 75236 Kämpfelbach (DE); Vogt, Martin, 75248 Ölbronn (DE)
(74) Vertreter: Witte, Weller & Partner Patentanwälte mbB

(56) Entgegenhaltungen:
- EP-A1- 1 388 698
- EP-A1- 1 536 169
- EP-A2- 0 380 754
- WO-A1-2004/109089
- WO-A1-2005/108840
- DE-B- 1 169 242
- US-A- 5 232 196
- US-A- 5 758 864

## Beschreibung

Die Erfindung betrifft eine Vorrichtung zur Durchflussregelung eines flüssigen oder gasförmigen Mediums, mit mindestens einer Durchflussöffnung für das Medium und einem beweglichen Ventilglied zum Steuern der Durchflussöffnung, wobei das Ventilglied einen beweglichen Magnetanker eines Elektromagneten und ein am Magnetanker festgelegtes Dichtungselement, das mit einem die mindestens eine Durchflussöffnung umschließenden Ventilsitz zusammenwirkt, und ein mit dem Dichtungselement und/oder Magnetanker fest verbundenes Lagerelement zu einer reibungsarmen Lagerung des Ventilglieds umfasst, wobei auf das Ventilglied mindestens ein, vorzugsweise viskoelastischer, Dämpfungskörper wirkt, der am Lagerelement angreift und so angeordnet ist, dass er mit Abheben des Dichtungselements vom Ventilsitz einem Kompressionsdruck ausgesetzt ist, wobei das Ventilglied in eine in einem Ventilgehäuse ausgebildete Ventilkammer hineinragt, in der Durchflussöffnung und Ventilsitz ausgebildet sind, wobei der mindestens eine Dämpfungskörper sich an einer Kammerwand der Ventilkammer abstützt, wobei das Lagerelement von einer in der Ventilkammer aufgespannten Flachfeder gebildet ist, die randseitig im Ventilgehäuse festgelegt und mittig fest mit dem Dichtungselement und dem Magnetanker verbunden ist, und wobei das Ventilgehäuse zweiteilig aus einem Ventilkörper, in dem die Ventilkammer und in die Ventilkammer mündende Kanäle eingeformt sind, und einem die Ventilkammer abschließenden Ventildeckel zusammengesetzt ist.

Eine derartige Vorrichtung ist aus der US 5,232,196 A bekannt, wobei der Dämpfungskörper als O-Ring gestaltet und zwischen einer Flachfeder und einem Ventilkörper aufgenommen ist.

Ähnliche Vorrichtungen sind bekannt (EP 0 380 754 A2, EP 1 536 169 A1). Die Vorrichtung weist ein 2/2-Wegeventil mit einem eine von dem Medium durchströmbare Ventilöffnung steuernden Ventilglied und einem das Ventilglied betätigenden Elektromagneten auf. Das Ventilglied ist in einer in einem Ventilgehäuse ausgebildeten Ventilkammer angeordnet, in der die zwischen einem Ventileinlass und einem Ventilauslass liegende Ventilöffnung ausgebildet ist. Die Ventilöffnung ist von einem Ventilsitz umschlossen, mit dem das Ventilglied zum Schließen und Freigeben der Ventilöffnung zusammenwirkt.

Der Elektromagnet weist einen Magnetkreis mit einer Magnet- oder Erregerspule, mit einer außen die Magnetspule aufnehmenden Ankerhülse, die mit einem Ankerstopfen verschlossen ist, und mit einem im Innern der Ankerhülse geführten Magnetanker auf. Der Magnetanker ist mittels zweier am oberen und unteren Stirnende angeordneten Flachfedern in der Ankerhülse axial verschieblich gehalten und begrenzt zusammen mit dem Ankerstopfen einen im Magnetkreis enthaltenen Arbeitsluftspalt. Die Ankerhülse taucht in die Ventilkammer ein. Die Eintauchstelle ist gegenüber dem Ventilgehäuse mittels eines Dichtungsrings abgedichtet. Das Ventilglied weist einen Dichtungshalter mit einem in den Magnetanker axial eingesetzten Zapfen und eine im Dichtungshalter aufgenommene Dichtplatte auf, die mit dem Ventilsitz zusammenwirkt.

Der Schließzustand des Ventils wird durch eine den Magnetanker beaufschlagende Ventilschließfeder herbeigeführt, die in einem Sackloch im Magnetanker einliegt und sich am Ankerstopfen abstützt und die Dichtungsplatte auf den Ventilsitz aufpresst. Bei Bestromung des Elektromagneten wird der Magnetanker gegen die Federkraft der Ventilschließfeder axial verschoben, und der Magnetanker hebt das Ventilglied vom Ventilsitz ab, wodurch die Ventilöffnung freigegeben wird und je nach Hub des Ventilglieds eine größere oder eine kleinere Mediummenge vom Ventileinlass über die Ventilkammer zum Ventilauslass strömt. Die Ventilkammer ist ständig mit Medium gefüllt, so dass das Ventilglied und das Stirnende des Magnetankers stets vom Medium umspült ist.

Bei einem bekannten Ventil (EP 1 388 698 A2) besteht das Ventilglied aus einer Membran, die eine Öffnung zur Dämpfung enthält. Bekannt ist es ferner (DE 1 169 242), das Ventilglied aus elastischem Kunststoff zu gestalten, wie dies auch aus WO 2005/108840 A1, US 5,758,864 und WO 2004/109089 A1 hervorgeht. Im letztgenannten Fall weist der Ventilkörper zum Ventilsitz hin gerichtete Erhebungen auf, die als Dämpfungselemente das Aufprallen des Ventilkörpers am Gehäuse beim Öffnen des Ventils dämpfen sollen, so daß keine störenden Geräusche entstehen.

Der Erfindung liegt die Aufgabe zugrunde, eine Vorrichtung zur Durchflussregelung eines flüssigen oder gasförmigen Mediums anzugeben, die einen großen Dynamikbereich aufweist und somit eine feine und präzise schwingungsfreie Durchflussregelung von extrem unterschiedlichen Durchflussmengen des Mediums ermöglicht.

Die Aufgabe ist erfindungsgemäß dadurch gelöst, dass der Rand der Flachfeder zwischen dem Ventilkörper und dem Ventildeckel eingespannt ist, und dass mehrere um gleiche Umfangswinkel gegeneinander versetzte Dämpfungskörper vorgesehen sind, die sich einerseits an der Flachfeder und andererseits am Ventildeckel abstützen.

Die erfindungsgemäße Vorrichtung hat den Vorteil, dass durch den mindestens einen auf das bewegliche Ventilglied wirkenden, vorzugsweise viskoelastischen, Dämpfungskörper, z.B. aus einem gelartigen Material, das Ventilglied bei seiner Hubbewegung eine geschwindigkeitsabhängige "dynamische" Dämpfung erfährt und dadurch Durchflussschwankungen verhindert werden. Kleinere Durchflussänderungen werden verzögerungsarm ausgeführt. Bei größeren Durchflussmengen werden Schwingungen des Ventilglieds bei der Durchflussregelung verhindert. Der erzielbare Dynamikbereich ist größer 1:2000. Durch eine Geldämpfung wird der Übergang von Haft- zu Gleitreibung, der sog. Stick-Slip, vermieden. Im Gegensatz zu einer Reibungsdämpfung erzeugt eine Geldämpfung keine größere Hysterese. Beispiele für gelartiges Material, das vorteilhaft für den Dämpfungskörper verwendet wird, sind z. B. Polyurethan-Gel und Silikon-Gel. Auch andere Dämpfungsmittel bzw. anderes Dämpfungsmaterial können für den Dämpfungskörper zum Einsatz kommen.

Der mindestens eine auf das Ventilglied wirkende Dämpfungskörper kann mittelbar oder unmittelbar an einem der beweglichen Ventilgliedteile angreifen, z. B. am Magnetanker und/oder am Dichtungselement und/oder an dessen Lagerelement. Dadurch bietet sich eine große Anzahl von Möglichkeiten zur konstruktionsgerechten Integration des mindestens einen Dämpfungskörpers unter Berücksichtigung konstruktiver Vorgaben innerhalb der Vorrichtung. Der Dämpfungskörper wird erfindungsgemäß so angeordnet, dass er mit Abheben des Dichtungselements vom Ventilsitz einem Kompressionsdruck ausgesetzt ist.

Weitere besondere Erfindungsmerkmale sowie Ausgestaltungen des Erfindungsgegenstandes ergeben sich aus den weiteren Ansprüchen und der nachfolgenden Beschreibung.

Gemäß der Erfindung ragt das Ventilglied in eine in einem Ventilgehäuse ausgebildete Ventilkammer hinein, in der Durchflussöffnung und Ventilsitz ausgebildet sind. Der Dämpfungskörper ist in der Ventilkammer angeordnet und stützt sich an der Kammerwand ab.

Gemäß der Erfindung ist das Lagerelement von einer in der Ventilkammer aufgespannten Flachfeder gebildet. Die Flachfeder ist randseitig im Ventilgehäuse festgelegt, während Dichtungselement und Magnetanker mittig an der Flachfeder befestigt sind. In diesem Fall kann es konstruktiv vorteilhaft sein, dass der mindestens eine Dämpfungskörper z. B. an der Flachfeder angreift und hierzu sich einerseits an der Flachfeder und andererseits an der der Flachfeder gegenüberliegenden Kammerwand der Ventilkammer abstützt. Um die Dämpfung zu optimieren, sind erfindungsgemäß mehrere um gleiche Umfangswinkel zueinander versetzt angeordnete Dämpfungskörper in der beschriebenen Weise in der Ventilkammer angeordnet.

Gemäß einer vorteilhaften Ausführungsform der Erfindung ist die Flachfeder zum Ventilsitz hin vorgespannt und beeinflusst zusammen mit einer am Magnetanker angreifenden Einstellfeder die Schließkraft des Ventilglieds.

Die Erfindung ist nachfolgend anhand eines in den Zeichnungen dargestellten Ausführungsbeispiels näher erläutert. Es zeigen:
- Fig. 1: einen Längsschnitt einer Vorrichtung zur Durchflussregelung eines flüssigen oder gasförmigen Mediums,
- Fig. 2: eine Draufsicht einer Flachfeder mit aufgesetzten Dämpfungskörpern in der Vorrichtung gemäß Fig. 1.

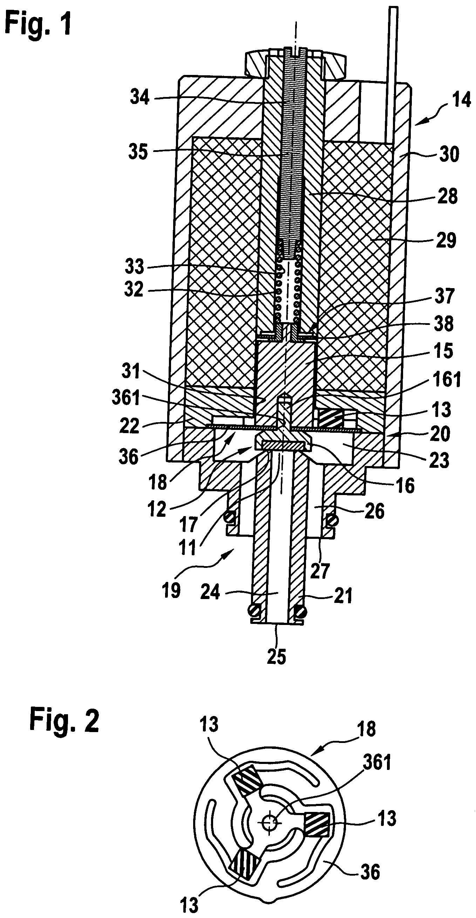

Die in Fig. 1 beispielhaft im Längsschnitt dargestellte Vorrichtung zur Durchflussregelung eines flüssigen oder gasförmigen Mediums, auch als fluides, fließendes oder strömendes Medium bezeichnet, weist mindestens eine Durchflussöffnung 11 für das Medium und ein bewegliches Ventilglied 12 zum Steuern der Durchflussöffnung 11 auf, wobei zur Erzielung einer feinen und präzisen Regelung des Durchflusses des Mediums durch die Durchflussöffnung 11 bei sehr unterschiedlich großen Durchflussmengen mindestens ein, vorzugsweise viskoelastischer, Dämpfungskörper 13 auf das Ventilglied 12 wirkt. Das von einem Elektromagneten 14 betätigte Ventilglied 12 umfasst einen Magnetanker 15 des Elektromagneten 14, ein Dichtungselement 16, das mit einem die Durchflussöffnung 11 umschließenden Ventilsitz 17 zum Steuern der Durchflussöffnung 11 zusammenwirkt, und ein Lagerelement 18 zur reibungsarmen bzw. weitgehend reibungsfreien Lagerung des Ventilglieds 12, wobei Magnetanker 15, Dichtungselement 16 und Lagerelement 18 miteinander fest verbundene, bewegliche Teile sind und der mindestens eine Dämpfungskörper 13 an einem dieser Ventilgliedteile angreift. Dabei ist der Dämpfungskörper 13 so angeordnet, dass er mit Abheben des Dichtungselements 16 vom Ventilsitz 17 einem Kompressionsdruck ausgesetzt ist. Der Dämpfungskörper 13 besteht z. B. aus gelartigem Material, wobei z. B. Polyurethan-Gel oder Silikon-Gel eingesetzt werden können.

Konstruktiv ist die Vorrichtung aus einem Ventil 19 und dem das Ventil 19 betätigenden Elektromagneten 14 zusammengesetzt. Das Ventil 19 ist im Ausführungsbeispiel der Fig. 1 als 2/2-Wegeventil ausgeführt, kann aber z.B. auch als 3/2-Wegeventil konzipiert werden. Das Ventil 19 weist ein zweiteiliges Ventilgehäuse 20 auf, das sich aus einem Ventilkörper 21 und einem den Ventilköper 21 verschließenden Ventildeckel 22 zusammensetzt. In dem Ventilgehäuse 20 ist eine Ventilkammer 23 vorhanden, deren Kammerwände von Ventilkörper 21 und Ventildeckel 22 gebildet sind. In der Ventilkammer 23 ist der die Durchflussöffnung 11 umschließende Ventilsitz 17 am Ventilkörper 21 ausgebildet. Die Ventilkammer 23 steht über einen zur Durchflussöffnung 11 geführten ersten Kanal 24 mit einem ersten Ventilanschluss 25 und über einen zweiten Kanal 26 mit einem zweiten Ventilanschluss 27 in Verbindung. Beide Kanäle 24, 26 sind im Ventilkörper 21 ausgeformt.

Der Elektromagnet 14 weist neben dem Magnetanker 15 einen koaxial zum Magnetanker 15 angeordneten Magnetkern 28, eine auf den Magnetkern 28 aufgeschobene Magnetspule 29 und ein topfartiges Magnetgehäuse 30 auf, in dem Magnetkern 28 und Magnetspule 29 aufgenommen sind. Das den Ventilkörper 21 teilweise übergreifende Magnetgehäuse 30 umschließt fest den Ventildeckel 22 und bezieht diesen als Rückschlussjoch in den Magnetkreis des Elektromagneten 14 ein. Der Magnetanker 15 ist durch eine zentrale Öffnung 31 im Ventildeckel 22 hindurchgeführt. An der vom Dichtungselement 16 abgekehrten Stirnseite des Magnetankers 15 greift eine Ventilschließfeder 32 an, die in einer zentralen Axialbohrung 33 im Magnetkern 28 einliegt. Mittels einer in einem Gewindeabschnitt 34 der Axialbohrung 33 verschraubbaren Einstellschraube 35 wird die Vorspannung der Ventilschließfeder 32 und damit die Schließkraft des Ventilglieds 12 eingestellt.

Im dargestellten Ausführungsbeispiel ist das Lagerelement 18 des Ventilglieds 12 als eine in der Ventilkammer 23 aufgespannte Flachfeder 36 ausgebildet, die randseitig im Ventilgehäuse 20 festgelegt ist, und zwar zwischen Ventilkörper 21 und Ventildeckel 22 eingespannt ist, und die mittig fest mit Dichtungselement 16 und Magnetanker 15 verbunden ist. Das Dichtungselement 16 ist an der Stirnseite des Magnetankers 15 angeordnet und z.B. mit einem Zapfen 161 in den Magnetanker 15 eingepresst, wobei der Zapfen 161 durch ein Zentralloch 361 in der Flachfeder 36 hindurchgesteckt und dadurch die Flachfeder 36 zwischen Dichtungselement 16 und Magnetanker 15 festgespannt ist. Die in Fig. 1 in ihrer Einspannlage im Ventilgehäuse 20 zu sehende Flachfeder 36 ist in Fig. 2 in Draufsicht mit mehreren aufgesetzten Dämpfungskörpern 13 dargestellt, wobei die Dämpfungskörper 13 zur besseren Sichtbarmachung mit einer Schraffur belegt sind. Die vorzugsweise gelartigen Dämpfungskörper 13 sind in Umfangsrichtung versetzt zueinander in der Ventilkammer 23 angeordnet. Sie stützen sich einerseits an der Flachfeder 36 und andererseits an dem eine der Kammerwände der Ventilkammer 23 bildenden Ventildeckel 22 ab, wobei sie z. B. am Ventildeckel 22 befestigt, vorzugsweise angeklebt, sind. Im dargestellten Ausführungsbeispiel sind drei solche um jeweils 120° zueinander versetzte Dämpfungskörper 13 vorhanden, wie dies in Fig. 2 zu sehen ist. Vorteilhaft ist die Flachfeder 36 zum Ventilsitz 17 hin vorgespannt und liefert einen Beitrag zur Schließkraft des Ventilglieds 12.

Zur Erzielung einer berührungslosen Verschiebbarkeit des Magnetankers 15 in der zentralen Öffnung 31 im Ventildeckel 22 ist auf der von der Lagerstelle 18 abgekehrten Seite des Magnetankers 15 ein weiteres Lagerelement 37 für das Ventilglied 12 vorgesehen. Das weitere Lagerelement 37 ist wiederum eine Flachfeder 38, die zwischen Magnetanker 15 und Magnetkern 28 angeordnet ist und sich einerseits am Stirnende des Mangetankers 12 und andererseits am Stirnende des Magnetkerns 28 abstützt. Die weitere Flachfeder 38 hat die gleiche Gestalt wie die in Fig.2 dargestellte Flachfeder 36 des Lagerelements 18, jedoch einen kleineren Außendurchmesser. Die in Fig.2 auf die Flachfeder 36 aufgesetzten Dämpfungskörper 13 entfallen selbstverständlich.

## Patentansprüche

1. Vorrichtung zur Durchflussregelung eines flüssigen oder gasförmigen Mediums, mit mindestens einer Durchflussöffnung (11) für das Medium und einem beweglichen Ventilglied (12) zum Steuern der Durchflussöffnung (11),
wobei das Ventilglied (12) einen beweglichen Magnetanker (15) eines Elektromagneten (14) und ein am Magnetanker (15) festgelegtes Dichtungselement (16), das mit einem die mindestens eine Durchflussöffnung (11) umschließenden Ventilsitz (17) zusammenwirkt, und ein mit dem Dichtungselement (16) und/oder Magnetanker (15) fest verbundenes Lagerelement (18) zu einer reibungsarmen Lagerung des Ventilglieds (12) umfasst, wobei auf das Ventilglied (12) mindestens ein, vorzugsweise viskoelastischer, Dämpfungskörper (13) wirkt, der am Lagerelement (18) angreift und so angeordnet ist, dass er mit Abheben des Dichtungselements (16) vom Ventilsitz (17) einem Kompressionsdruck ausgesetzt ist,
wobei das Ventilglied (12) in eine in einem Ventilgehäuse (20) ausgebildete Ventilkammer (23) hineinragt, in der Durchflussöffnung (11) und Ventilsitz (17) ausgebildet sind, wobei der mindestens eine Dämpfungskörper (13) sich an einer Kammerwand der Ventilkammer (23) abstützt,
wobei das Lagerelement (18) von einer in der Ventilkammer (23) aufgespannten Flachfeder (36) gebildet ist, die randseitig im Ventilgehäuse (20) festgelegt und mittig fest mit dem Dichtungselement (16) und dem Magnetanker (15) verbunden ist, und
wobei das Ventilgehäuse (20) zweiteilig aus einem Ventilkörper (21), in dem die Ventilkammer (23) und in die Ventilkammer (23) mündende Kanäle (24, 26) eingeformt sind, und einem die Ventilkammer (23) abschließenden Ventildeckel (22) zusammengesetzt ist,
**dadurch gekennzeichnet,**
**dass** der Rand der Flachfeder (36) zwischen dem Ventilkörper (21) und dem Ventildeckel (22) eingespannt ist, und
**dass** mehrere um gleiche Umfangswinkel gegeneinander versetzte Dämpfungskörper (13) vorgesehen sind, die sich einerseits an der Flachfeder (36) und andererseits am Ventildeckel (22) abstützen.

2. Vorrichtung nach Anspruch 1,
**dadurch gekennzeichnet,**
**dass** der mindestens eine Dämpfungskörper (13) aus gelartigem Material besteht.

3. Vorrichtung nach Anspruch 2,
**dadurch gekennzeichnet,**
**dass** der mindestens eine Dämpfungskörper (13) aus Polyurethan-Gel besteht oder dieses enthält.

4. Vorrichtung nach Anspruch 2,
**dadurch gekennzeichnet,**
**dass** der mindestens eine Dämpfungskörper (13) aus Silikon-Gel besteht oder dieses enthält.

5. Vorrichtung nach Anspruch 1,
**dadurch gekennzeichnet,**
**dass** die Flachfeder (36) zwischen dem Dichtungselement (16) und dem Magnetanker (15) eingespannt ist.

6. Vorrichtung nach Anspruch 1,
**dadurch gekennzeichnet,**
**dass** die Dämpfungskörper (13) am Ventildeckel (22) befestigt sind.

7. Vorrichtung nach einem der Ansprüche 1 bis 6,
**dadurch gekennzeichnet,**
**dass** die Flachfeder (36) zum Ventilsitz (17) hin vorgespannt ist.

8. Vorrichtung nach einem der Ansprüche 1 bis 7,
**dadurch gekennzeichnet,**
**dass** auf der vom Lagerelement (18) abgekehrten Seite des Magnetankers (15) ein weiteres Lagerelement (37) für das Ventilglied (12) angeordnet ist.

9. Vorrichtung nach Anspruch 8,
**dadurch gekennzeichnet,**
**dass** das weitere Lagerelement (37) eine Flachfeder (38) ist, die zwischen dem Magnetanker (15) und einem mit dem Magnetanker (15) koaxialen Magnetkern (28) des Elektromagneten (14) angeordnet ist und sich gegen deren Stirnenden abstützt.

10. Vorrichtung nach Anspruch 9,
**dadurch gekennzeichnet,**
**dass** das Ventilglied (12) von einer Ventilschließfeder (32) in Richtung zum Ventilsitz (17) belastet ist, deren Vorspannung mittels einer auf die Ventilschließfeder (32) einwirkenden Einstellschraube (35) einstellbar ist, und dass Ventilschließfeder (32) und Einstellschraube (35) in einer Axialbohrung (33) im Magnetkern (28) aufgenommen sind.

## Claims

1. A device for controlling the flow of a liquid or gaseous medium, comprising at least one flow opening (11) for the medium and a movable valve member (12) for controlling the flow opening (11),
wherein the valve member (12) comprises a movable magnet armature (15) of an electromagnet (14), and a sealing element (16), which is fixed to the magnet armature (15), and which interacts with a valve seat (17) which surrounds the at least one through-flow opening (11), and a bearing element (18) which is fixedly connected to the sealing element (16) and/or magnet armature (15) for low-friction mounting of the valve member (12),
wherein at least one, preferably viscoelastic, damping body (13) acts on the valve member (12), which damping body (13) engages the bearing element (18) and which is arranged in such a way that it is subjected to a compression pressure when the sealing element (16) is lifted off the valve seat (17),
wherein the valve member (12) extends into a valve chamber (23) formed in a valve housing (20), in which valve chamber (23) the flow opening (11) and the valve seat (17) are formed, wherein the at least one damping body (13) is supported on a chamber wall of the valve chamber (23),
wherein the bearing element (18) is formed by a flat spring (36), which is clamped in the valve chamber (23), fixed at the edge in the valve housing (20), and which is centrally firmly connected to the sealing element (16) and the magnet armature (15), and
wherein the valve housing (20) is composed in two parts of a valve body (21), in which the valve chamber (23) and channels (24, 26) opening into the valve chamber (23) are formed, and a valve cover (22) closing the valve chamber (23),
**characterized in that**
the edge of the flat spring (36) is clamped between the valve body (21) and the valve cover (22), and
a plurality of damping bodies (13) are provided, which are offset relative to one another by equal circumferential angles, and which are supported on the one hand on the flat spring (36) and on the other hand on the valve cover (22).

2. The device according to claim 1,
**characterized in that**
the at least one damping body (13) consists of gel-like material.

3. The device according to claim 2,
**characterized in that**
the at least one damping body (13) consists of or contains polyurethane gel.

4. The device according to claim 2,
**characterized in that**
the at least one damping body (13) consists of or contains silicone gel.

5. The device according to claim 1,
**characterized in that**
the flat spring (36) is clamped between the sealing element (16) and the magnet armature (15).

6. The device according to claim 1,
**characterized in that**
the damping bodies (13) are attached to the valve cover (22).

7. The device according to any of claims 1 to 6,
**characterized in that**
the flat spring (36) is biased towards the valve seat (17).

8. The device according to any of claims 1 to 7,
**characterized in that**
a further bearing element (37) for the valve member (12) is arranged on the side of the magnet armature (15) facing away from the bearing element (18).

9. The device according to claim 8,
**characterized in that**
the further bearing element (37) is a flat spring (38), which is arranged between the magnet armature (15) and a magnet core (28) of the electromagnet (14) that is coaxial with the magnet armature (15), and which flat spring (38) is supported against their front ends.

10. The device according to claim 9,
**characterized in that**
the valve member (12) is biased in the direction towards the valve seat (17) by a valve closing spring (32), the preloading of which is adjustable by means of an adjustment screw (35), which acts on the valve closing spring (32), and
the valve closing spring (32) and the adjustment screw (35) are accommodated in an axial bore (33) in the magnet core (28).

## Revendications

1. Dispositif de régulation de débit pour un milieu liquide ou gazeux, comprenant au moins une ouverture de passage (11) pour le milieu et un organe de soupape mobile (12) pour commander l'ouverture de passage (11),
l'organe de soupape (12) comprenant un induit magnétique mobile (15) d'un électroaimant (14) et un élément d'étanchéité (16) fixé à l'induit magnétique (15), qui coopère avec un siège de soupape (17) entourant l'au moins une ouverture de passage (11), et un élément de palier (18) connecté fixement à l'élément d'étanchéité (16) et/ou à l'induit magnétique (15) pour assurer un support sur palier à faible friction de l'organe de soupape (12), au moins un corps d'amortissement (13), de préférence viscoélastique, agissant sur l'organe de soupape (12), lequel vient en prise sur l'élément de palier (18) et est disposé de telle sorte qu'il soit soumis à une pression de compression avec le soulèvement de l'élément d'étanchéité (16) du siège de soupape (17),
l'organe de soupape (12) pénétrant dans une chambre de soupape (23) réalisée dans un boîtier de soupape (20), dans laquelle chambre sont réalisées l'ouverture de passage (11) et le siège de soupape (17), l'au moins un corps d'amortissement (13) s'appuyant contre une paroi de chambre de la chambre de soupape (23),
l'élément de palier (18) étant formé par un ressort plat (36) tendu dans la chambre de soupape (23), qui est fixé au niveau du bord dans le boîtier de soupape (20) et qui est connecté centralement fixement à l'élément d'étanchéité (16) et à l'induit magnétique (15), et
le boîtier de soupape (20) étant réalisé en deux parties à partir d'un corps de soupape (21), dans lequel sont formés la chambre de soupape (23) et des canaux (24, 26) débouchant dans la chambre de soupape (23), et d'un couvercle de soupape (22) fermant la chambre de soupape (23),
**caractérisé en ce que**
le bord du ressort plat (36) est serré entre le corps de soupape (21) et le couvercle de soupape (22), et
**en ce que** plusieurs corps d'amortissement (13) décalés les uns par rapport aux autres d'angles périphériques identiques sont prévus, lesquels s'appuient d'une part contre le ressort plat (36) et d'autre part contre le couvercle de soupape (22).

2. Dispositif selon la revendication 1,
**caractérisé en ce que**
l'au moins un corps d'amortissement (13) se compose d'un matériau de type gel.

3. Dispositif selon la revendication 2,
**caractérisé en ce que**
l'au moins un corps d'amortissement (13) se compose d'un gel de polyuréthane ou contient celui-ci.

4. Dispositif selon la revendication 2,
**caractérisé en ce que**
l'au moins un corps d'amortissement (13) se compose d'un gel de silicone ou contient celui-ci.

5. Dispositif selon la revendication 1,
**caractérisé en ce que**
le ressort plat (36) est serré entre l'élément d'étanchéité (16) et l'induit magnétique (15).

6. Dispositif selon la revendication 1,
**caractérisé en ce que**
les corps d'amortissement (13) sont fixés au couvercle de soupape (22).

7. Dispositif selon l'une quelconque des revendications 1 à 6,
**caractérisé en ce que**
le ressort plat (36) est précontraint vers le siège de soupape (17).

8. Dispositif selon l'une quelconque des revendications 1 à 7,
**caractérisé en ce**
**qu'**un élément de palier supplémentaire (37) pour l'organe de soupape (12) est disposé du côté de l'induit magnétique (15) opposé à l'élément de palier (18).

9. Dispositif selon la revendication 8,
**caractérisé en ce que**
l'élément de palier supplémentaire (37) est un ressort plat (38) qui est disposé entre l'induit magnétique (15) et un noyau magnétique (28) de l'électroaimant (14) coaxial à l'induit magnétique (15) et s'appuie contre ses extrémités frontales.

10. Dispositif selon la revendication 9,
**caractérisé en ce que**
l'organe de soupape (12) est sollicité par un ressort de fermeture de soupape (32) dans la direction du siège de soupape (17), dont la précontrainte peut être ajustée au moyen d'une vis de réglage (35) agissant sur le ressort de fermeture de soupape (32), et **en ce que** le ressort de fermeture de soupape (32) et la vis de réglage (35) sont reçus dans un alésage axial (33) dans le noyau magnétique (28).
